# EUROPEAN PATENT APPLICATION

(11) **EP 4 682 232 A1**
(43) Date of publication of application: **21.01.2026**
(21) Application number: 24770970.2
(22) Date of filing: 14.03.2024
(51) Int. Cl.: C10M 169/02, C10M 135/26, C10M 137/10, C10M 139/00, C10M 159/22, C10M 159/24, F16H 57/04, C10N 10/04, C10N 10/12, C10N 40/00, C10N 40/04

(54) **LUBRICATING OIL COMPOSITION**

(30) Priority: 16.03.2023 JP 2023041996
(71) Applicant: Idemitsu Kosan Co.,Ltd., Tokyo 100-8321 (JP)
(72) Inventor: TATSUMI, Hiroyuki, Tokyo 100-8321 (JP); NARITA, Keiichi, Tokyo 100-8321 (JP)
(74) Representative: Vossius & Partner Patentanwälte Rechtsanwälte mbB
(86) International application number: PCT/JP2024/009998
(87) International publication number: WO 2024/190867

(57) **Abstract**

There has been a need for a lubricating oil composition which enables the achievement of low friction properties and low copper dissolution amount at higher levels. The present invention provides a lubricating oil composition which contains a base oil (A), an organic molybdenum compound (B), one or more sulfur-based compounds (C) that are selected from among zinc dithiophosphate (C1) and sulfur-containing compounds (C2) which do not contain a metal atom in each molecule and have a sulfur chain length of 2 or more, and an overbased metal-based detergent (D) that has a base number of 100 mgKOH/g or more, wherein the content of the organic molybdenum compound (B) is more than 0.20% by mass but not more than 1.45% by mass based on the total amount of the lubricating oil composition.

## Description

### Technical Field

The present invention relates to a lubricating oil composition, a mechanical device including the lubricating oil composition, and a method of using the lubricating oil composition.

### Background Art

In recent years, reduction of carbon dioxide has been strongly demanded from the viewpoint of global environmental protection, and therefore, in the automotive field, efforts have been made to develop fuel-saving technologies. Examples of fuel-saving cars include hybrid cars and electric cars, and these cars are expected to rapidly spread in the future. A hybrid or electric car includes an electric motor, a generator, a reduction gear, an inverter, a storage battery, and the like, and runs using power from the electric motor. A lubricating oil composition that can be used in such an electric vehicle is required to have both excellent friction characteristics and material compatibility.

Various lubricating oil compositions that can be used for electric vehicles have been developed. For example, Patent Literatures 1 and 2 each disclose a lubricating oil containing a lubricating base oil, a metal detergent, a dispersant, zinc dialkyldithiophosphate (ZDDP) antiwear agent, a molybdenum dialkyldithiocarbamate (MoDTC), a viscosity modifier, and other lubricating oil additives at respective predetermined contents, and having a specific electrical conductivity and a specific kinematic viscosity at 100°C. The lubricating oil of Patent Literature 2 is essentially free of overbased metal detergents.

### Citation List

### Patent Literature

Patent Literature 1: Japanese Translation of PCT International Application Publication No. 2019-529675
Patent Literature 2: Japanese Translation of PCT International Application Publication No. 2019-532151

### Summary of Invention

### Technical Problem

Against this background, there is a demand for a lubricating oil composition having excellent friction characteristics and material compatibility, which can achieve low-friction characteristics and a reduction in the elution amount of copper at a higher level.

### Solution to Problem

The present invention provides embodiments [1] to [14] as set forth below.
[1] A lubricating oil composition comprising a base oil (A), an organomolybdenum compound (B), at least one sulfur-based compound (C) selected from zinc dithiophosphates (C1) and sulfur-containing compounds (C2) free of metal atoms in the molecule and having a sulfur-chain length of 2 or more, and an overbased metal-based detergent (D) having a base number of 100 mgKOH/g or more, wherein a content of the organomolybdenum compound (B) is more than 0.20 mass% and 1.45 mass% or less, based on a total amount of the lubricating oil composition.
[2] The lubricating oil composition according to [1], wherein the overbased metal-based detergent (D) contains at least one selected from overbased calcium sulfonate (D1), overbased calcium salicylate (D2), and overbased calcium phenate (D3).
[3] The lubricating oil composition according to [1] or [2], wherein the overbased metal-based detergent (D) contains the overbased calcium sulfonate (D1).
[4] The lubricating oil composition according to [3], wherein a content (d1) of the overbased calcium sulfonate (D1) in terms of calcium atoms is 50 ppm by mass or more, based on the total amount of the lubricating oil composition.
[5] The lubricating oil composition according to any one of [1] to [4], wherein a sulfur content is 0.08 mass% or more, based on the total amount of the lubricating oil composition.
[6] The lubricating oil composition according to any one of [1] to [5], wherein a content ratio [(B)/(C)] by mass of the organomolybdenum compound (B) to the sulfur-based compound (C) is 0.35 to 5.00.
[7] The lubricating oil composition according to any one of [1] to [6], wherein a content ratio [(D)/(C)] by mass of the overbased metal-based detergent (D) to the sulfur-based compound (C) is 0.01 to 10.
[8] The lubricating oil composition according to any one of [1] to [7], wherein the sulfur-based compound (C) contains a zinc dithiophosphate (C1), and a content ratio [(Mo)/(Zn)] by mass of molybdenum (Mo) derived from the organomolybdenum compound (B) to zinc (Zn) derived from the zinc dithiophosphate (C1) is 0.35 to 2.70.
[9] The lubricating oil composition according to any one of [1] to [8], wherein the sulfur-containing compounds (C2) are compounds represented by R²COOR¹-(S)ₓ-R¹COOR², wherein R¹ and R² are each independently a hydrocarbon group having 1 to 30 carbon atoms, and x is an integer of 2 or more.
[10] The lubricating oil composition according to any one of [1] to [9], wherein the composition has a kinematic viscosity at 100°C of 4.0 mm²/s or less.
[11] The lubricating oil composition according to any one of [1] to [10], wherein the composition is used for lubricating a mechanical device integrally comprising a motor and a reduction gear.
[12] The lubricating oil composition according to [11], wherein the mechanical device is a hydraulic device, a stationary transmission, an automotive transmission, or a cooling device for motors and batteries.
[13] A mechanical device integrally comprising a motor and a reduction gear, the mechanical device being filled with the lubricating oil composition according to any one of [1] to [10].
[14] A method of using a lubricating oil composition, comprising applying the lubricating oil composition according to any one of [1] to [10] to a mechanical device integrally comprising a motor and a reduction gear.

### Advantageous Effects of Invention

The lubricating oil composition according to one preferred embodiment of the present invention has excellent low-friction characteristics and can reduce the elution amount of copper. Therefore, the lubricating oil composition according to one preferred embodiment of the present invention can be suitably used for lubricating a mechanical device, such as an electric vehicle unit integrally comprising a motor and a reduction gear.

### Description of Embodiments

Regarding the numerical ranges described in the present specification, the upper limit and the lower limit can be combined freely. For example, with the description "preferably 30 to 100, more preferably 40 to 80" as numerical ranges, the range of "30 to 80" and the range of "40 to 100" are also included in the numerical ranges described in the present specification. Alternatively, for example, with the description "preferably 30 or more, more preferably 40 or more, and preferably 100 or less, more preferably 80 or less" as numerical ranges, the range of "30 to 80" and the range of "40 to 100" are also included in the numerical ranges described in the present specification.

In addition, for example, the description of "60 to 100" as a numerical range described in the present specification means a range of "60 or more (60 or more than 60) and 100 or less (100 or less than 100)".

The numerical range of a lower limit to an upper limit can be defined by appropriately selecting values from among respective options and optionally combining them in the definition of the upper limit and the lower limit described in the present specification.

In addition, a plurality of various requirements described in the present specification as preferred embodiments can be combined.

### [Features of Lubricating Oil Composition]

One embodiment of the present invention provides a lubricating oil composition comprising a base oil (A) (hereinafter also referred to as "component (A)"), an organomolybdenum compound (B) (hereinafter also referred to as "component (B)"), at least one sulfur-based compound (C) selected from zinc dithiophosphates (C1) and sulfur-containing compounds (C2) free of metal atoms in the molecule and having a sulfur-chain length of 2 or more (hereinafter also referred to as "component C", "components (C1)", and "components (C2)", respectively), and an overbased metal-based detergent (D) having a base number of 100 mgKOH/g or more (hereinafter also referred to as "component (D)"), wherein a content of the organomolybdenum compound (B) is more than 0.20 mass% and 1.45 mass% or less, based on a total amount of the lubricating oil composition.

Motors and reduction gears used in electric vehicle units such as hybrid cars and electric cars are required to have high efficiency and compatibility with copper parts. One method for improving the efficiency of the reduction gear may be, for example, blending the organomolybdenum compound (B) into the lubricating oil composition to improve the low-friction characteristics. That is, this method reduces the friction coefficient between metals by adding the organomolybdenum compound (B), thereby reducing frictional loss. However, simply adding the organomolybdenum compound (B) tends not to sufficiently improve the low-friction characteristics. On the other hand, the present inventors have found that the low-friction characteristics can be further improved by using the sulfur-based compound (C) in combination with the organomolybdenum compound (B).

However, their research has shown that the addition of the sulfur-based compound (C) causes a problem where the stability against oxidation deteriorates, which increases the elution amount of copper. As a result of further research to solve this secondary problem, the present inventors have found that when the overbased metal-based detergent (D) having a base number of 100 mgKOH/g or more is incorporated into the lubricating oil composition, the composition can reduce the elution amount of copper while achieving low-friction characteristics at a higher level.

The lubricating oil composition according to one embodiment of the present invention may further optionally contain other lubricating oil additives besides the components (B) to (D), as long as the effects of the present invention are not impaired.

In the lubricating oil composition according to one embodiment of the present invention, a total content of the components (A) to (D) is preferably 80 mass% or more, more preferably 85 mass% or more, still more preferably 90 mass% or more, and still much more preferably 95 mass% or more, based on the total amount (100 mass%) of the lubricating oil composition.

Details of the components contained in the lubricating oil composition according to one embodiment of the present invention will be described hereinafter.

### <Component (A): Base Oil>

The base oil contained in the lubricating oil composition according to one embodiment of the present invention may be a mineral oil, a synthetic oil, or a mixed oil of a mineral oil and a synthetic oil.

Examples of mineral oils include atmospheric residues obtained by subjecting crude oils, such as paraffinic crude oils, intermediate base crude oils, and naphthenic crude oils, to atmospheric distillation; distillates obtained by subjecting these atmospheric residues to vacuum distillation; refined oils obtained by subjecting the distillates to one or more of refining treatments, such as solvent deasphalting, solvent extraction, hydrocracking, solvent dewaxing, catalytic dewaxing, and hydrorefining; mineral oils (GTL) obtained by isomerizing waxes (GTL waxes (Gas To Liquids WAX)) produced from natural gas through Fischer-Tropsch process or the like; mineral oils (CTL) obtained by isomerizing waxes (CTL waxes (Coal To Liquids WAX)) produced from coal through Fischer-Tropsch process or the like; mineral oils (BTL) obtained by isomerizing waxes (BTL waxes (Biomass To Liquids WAX)) produced from biomass through Fischer-Tropsch process or the like; etc.

Examples of synthetic oils include α-olefins, and poly-α-olefins such as α-olefin homopolymers or α-olefin copolymers (for example, α-olefin copolymers having 8 to 14 carbon atoms, such as ethylene-α-olefin copolymers); isoparaffin; polyalkylene glycol; ester oils, such as polyol esters, dibasic acid esters, monoesters, and phosphoric acid esters; ether oils, such as polyphenyl ether; alkylbenzene; alkylnaphthalene; etc.

Among these, the base oil used in one embodiment of the present invention preferably contains at least one selected from mineral oils categorized in Group II and Group III of API (American Petroleum Institute) base oil categories, and synthetic oils. In one embodiment of the present invention, these base oils may be used alone or in combinations of two or more.

The base oil (A) used in one embodiment of the present invention has a kinematic viscosity at 100°C of preferably 6.0 mm²/s or less, more preferably 5.5 mm²/s or less, still more preferably 5.0 mm²/s or less, still much more preferably 4.5 mm²/s or less, still much more preferably 4.0 mm²/s or less, still much more preferably 3.5 mm²/s or less, particularly preferably 3.0 mm²/s or less, from the viewpoint of obtaining a lubricating oil composition with improved cooling performance.

On the other hand, the kinematic viscosity at 100°C of the base oil (A) is preferably 1.0 mm²/s or more, more preferably 1.2 mm²/s or more, and still more preferably 1.4 mm²/s or more, from the viewpoint of obtaining a lubricating oil composition with good oil film retention and enhanced lubrication performance and thus, improved part-protecting properties.

While the viscosity index of the base oil (A) used in one embodiment of the present invention may be set appropriately according to the use of the lubricating oil composition, the viscosity index is preferably 70 or more, more preferably 80 or more, still more preferably 90 or more, and particularly preferably 100 or more.

When a mixed oil that is a combination of two or more base oils is used as the component (A) in one embodiment of the present invention, the kinematic viscosity and the viscosity index of the mixed oil are preferably in the above-mentioned ranges. Therefore, the mixed oil may be prepared using a low-viscosity base oil and a high-viscosity base oil in combination, so as to have a kinematic viscosity and a viscosity index in the above-mentioned ranges.

The mixed oil may be a mixed oil of a combination of two or more base oils each having a kinematic viscosity at 100°C and a viscosity index falling in the above-mentioned ranges, or may be a mixed oil of a combination of a base oil having a kinematic viscosity at 100°C and a viscosity index falling in the above-mentioned ranges and a base oil having those not falling in the above-mentioned ranges. Alternatively, the mixed oil may be a mixed oil obtained by combining a low-viscosity base oil having a kinematic viscosity at 100°C and a viscosity index not falling in the above-mentioned ranges and a high-viscosity base oil, so as to be adjusted to a kinematic viscosity at 100°C and a viscosity index falling in the above-mentioned ranges.

In the present specification, the kinematic viscosity and the viscosity index mean values measured or calculated in accordance with JIS K2283:2000.

In the lubricating oil composition according to one embodiment of the present invention, the content of the base oil (A) is usually 55 mass% or more, preferably 60 mass% or more, more preferably 70 mass% or more, still more preferably 80 mass% or more, and particularly preferably 90 mass% or more, while it is preferably 99.9 mass% or less, more preferably 99.0 mass% or less, and still more preferably 98.5 mass% or less, based on the total amount (100 mass%) of the lubricating oil composition.

### <Component (B): Organomolybdenum Compound>

The lubricating oil composition of the present invention contains an organomolybdenum compound (B). The lubricating oil composition of the present invention contains the organomolybdenum compound (B) and the below-described sulfur-based compound (C) in combination, and can thus achieve improved low-friction characteristics. The organomolybdenum compound (B) may be any organic compound containing a molybdenum atom, but is preferably a compound represented by the following general formula (1):

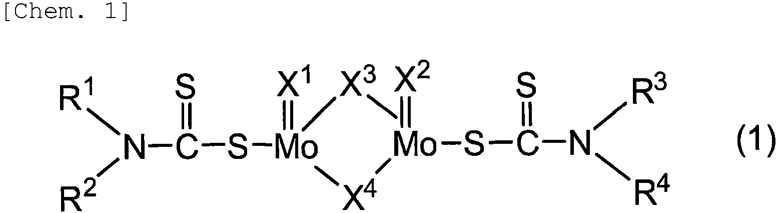

In Formula (1), R¹ to R⁴ are each independently a hydrocarbon group having 4 to 18 carbon atoms, preferably an alkyl group having 5 to 18 carbon atoms, an alkenyl group having 5 to 18 carbon atoms, a cycloalkyl group having 5 to 18 carbon atoms, an aryl group having 6 to 18 carbon atoms, an alkylaryl group having 7 to 18 carbon atoms, or an arylalkyl group having 7 to 18 carbon atoms.

Examples of alkyl groups having 5 to 18 carbon atoms include a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, and an octadecyl group.

Examples of alkenyl groups having 5 to 18 carbon atoms include an octenyl group, a nonenyl group, a decenyl group, an undecenyl group, a dodecenyl group, a tridecenyl group, a tetradecenyl group, and a pentadecenyl group.

Examples of cycloalkyl groups having 5 to 18 carbon atoms include a cyclohexyl group, a dimethylcyclohexyl group, an ethylcyclohexyl group, a methylcyclohexylmethyl group, a cyclohexylethyl group, a propylcyclohexyl group, a butylcyclohexyl group, and a heptylcyclohexyl group.

Examples of aryl groups having 6 to 18 carbon atoms include a phenyl group, a naphthyl group, an anthracenyl group, a biphenyl group, and a terphenyl group.

Examples of alkylaryl groups having 7 to 18 carbon atoms include a tolyl group, a dimethylphenyl group, a butylphenyl group, a nonylphenyl group, a methylbenzyl group, and a dimethylnaphthyl group.

Examples of arylalkyl groups having 7 to 18 carbon atoms include a phenylmethyl group, a phenylethyl group, and a diphenylmethyl group.

In formula (1), X¹ to X⁴ are each independently an oxygen atom or a sulfur atom. From the viewpoint of improving the solubility in the base oil (A), a molar ratio [S/O] of sulfur to oxygen atoms in X¹ to X⁴ is preferably 1/3 to 3/1, and more preferably 1.5/2.5 to 3/1.

In one embodiment of the present invention, the content of the organomolybdenum compound (B), based on the total amount (100 mass%) of the lubricating oil composition, is preferably more than 0.20 mass%, more preferably 0.25 mass% or more, still more preferably 0.30 mass% or more, and still much more preferably 0.35 mass% or more, from the viewpoint of obtaining a lubricating oil composition that can have improved low-friction characteristics, while it is preferably 1.45 mass% or less, more preferably 1.40 mass% or less, still more preferably 1.35 mass% or less, and still much more preferably 1.30 mass% or less, from the viewpoint of obtaining a lubricating oil composition with a small elution amount of copper.

In one embodiment of the present invention, the content of the organomolybdenum compound (B) in terms of molybdenum atoms, based on the total amount (100 mass%) of the lubricating oil composition, is preferably 100 ppm by mass or more, more preferably 200 ppm by mass or more, and still more preferably 300 ppm by mass or more, from the viewpoint of obtaining a lubricating oil composition that can have improved low-friction characteristics, while it is preferably 1400 ppm by mass or less, more preferably 1300 ppm by mass or less, and still more preferably 1200 ppm by mass or less, from the viewpoint of obtaining a lubricating oil composition with a small elution amount of copper.

### <Component (C): Sulfur-Based Compound>

The lubricating oil composition of the present invention contains at least one sulfur-based compound (C) selected from zinc dithiophosphates (C1) and sulfur-containing compounds (C2) free of metal atoms in the molecule and having a sulfur-chain length of 2 or more. The lubricating oil composition of the present invention contains the sulfur-based compound (C), and can thus have further improved low-friction characteristics obtained by the addition of the organomolybdenum compound (B).

The sulfur-based compound (C) used in one embodiment of the present invention is a zinc dithiophosphate (C1) (ZnDTP). Examples of zinc dithiophosphates (C1) include a zinc dithiophosphate (c1) having a primary alkyl group, a zinc dithiophosphate (c2) having a secondary alkyl group, and a zinc dithiophosphate (c3) having an aryl group.

These zinc dithiophosphates (C1) may be used alone or in combinations of two or more. The number of carbon atoms in the alkyl groups of the zinc dithiophosphates (C1) is not specifically limited and may be selected appropriately according to the purpose, but is preferably 1 to 10, 2 to 9, or 3 to 8. The zinc dithiophosphates (C1) having a secondary alkyl group and the like may contain alkyl groups having different numbers of carbon atoms.

The sulfur-based compound (C) used in one embodiment of the present invention is a sulfur-containing compound (C2) free of metal atoms in the molecule and having a sulfur-chain length of 2 or more. The sulfur-containing compounds (C2) in one embodiment are compounds represented by the following general formula (2):

R²COOR¹-(S)ₓ-R¹COOR² (2)

In the formula, R¹ and R² are each independently a hydrocarbon group having 1 to 30 carbon atoms. Examples of the hydrocarbon group include an alkyl group, an alkenyl group, a cycloalkyl group, an aryl group, and a group of a combination of two or more of these groups. The number of carbon atoms in the hydrocarbon group is 1 to 30, and may be, for example, 2 to 26 or 4 to 20. In the formula, x is an integer of 2 or more, and x may be 2 to 6, 2 to 4, 2 to 3, or 2.

Examples of the alkyl group include a methyl group, an ethyl group, a propyl group (n-propyl group or i-propyl group), a butyl group (n-butyl group, i-butyl group, s-butyl group, or t-butyl group), a pentyl group (n-pentyl group, i-pentyl group, or neopentyl group), a hexyl group, a heptyl group, an octyl group, a 2-ethylhexyl group, a nonyl group, a decyl group, an undecyl group, a dodecyl group, a tridecyl group, a tetradecyl group, a pentadecyl group, a hexadecyl group, a heptadecyl group, and an octadecyl group. The alkyl group may be a straight-chain alkyl group, or may be a branched chain alkyl group.

Examples of the alkenyl group include an ethenyl group (vinyl group), a propenyl group, a butenyl group, a pentenyl group, a hexenyl group, a heptenyl group, an octenyl group, a nonenyl group, a decenyl group, a dodecenyl group, a tridecenyl group, a tetradecenyl group, a pentadecenyl group, a hexadecenyl group, and an octadecenyl group (oleyl group). The alkenyl group may be a straight-chain alkenyl group, or may be branched chain alkenyl group.

Examples of the cycloalkyl group include a cyclopropyl group, a cyclobutyl group, a cyclopentyl group, a cyclohexyl group, a cycloheptyl group, a cyclooctyl group, and an adamantyl group.

Examples of the aryl group include a phenyl group, a naphthyl group, an anthryl group, a phenanthryl group, a biphenyl group, and a terphenyl group.

In one embodiment of the present invention, the content of the sulfur-based compound (C), based on the total amount (100 mass%) of the lubricating oil composition, is preferably 0.01 mass% or more, more preferably 0.05 mass% or more, and still more preferably 0.10 mass% or more, from the viewpoint of obtaining a lubricating oil composition that can have further improved low-friction characteristics, while it is preferably 1.00 mass% or less, more preferably 0.90 mass% or less, and still more preferably 0.80 mass% or less, from the viewpoint of obtaining a lubricating oil composition with a small elution amount of copper.

In one embodiment of the present invention, the content of the sulfur-based compound (C) in terms of sulfur atoms, based on the total amount (100 mass%) of the lubricating oil composition, is preferably 0.01 mass% or more, more preferably 0.02 mass% or more, and still more preferably 0.03 mass% or more, from the viewpoint of obtaining a lubricating oil composition that can have further improved low-friction characteristics, while it is preferably 0.30 mass% or less, more preferably 0.20 mass% or less, and still more preferably 0.15 mass% or less, from the viewpoint of obtaining a lubricating oil composition with a small elution amount of copper.

When the sulfur-based compound (C) used in one embodiment of the present invention is a zinc dithiophosphate (C1), the content of the sulfur-based compound (C) in terms of zinc atoms, based on the total amount (100 mass%) of the lubricating oil composition, is preferably 10 ppm by mass or more, 50 ppm by mass or more, 100 ppm by mass or more, 300 ppm by mass or more, or 500 ppm by mass or more, from the viewpoint of obtaining a lubricating oil composition that can have further improved low-friction characteristics, while it is preferably 1000 ppm by mass or less, 900 ppm by mass or less, 800 ppm by mass or less, or 700 ppm by mass or less, from the viewpoint of obtaining a lubricating oil composition with a small elution amount of copper.

In one embodiment of the present invention, a content ratio [(B)/(C)] by mass of the organomolybdenum compound (B) to the sulfur-based compound (C) is preferably 0.35 or more, more preferably 0.50 or more, and still more preferably 0.70 or more, from the viewpoint of obtaining a lubricating oil composition that can have further improved low-friction characteristics, while it is preferably 5.00 or less, more preferably 3.00 or less, and still more preferably 2.30 or less, from the viewpoint of obtaining a lubricating oil composition with a small elution amount of copper.

In one embodiment of the present invention, a ratio [Mo/S] by mass of molybdenum atoms derived from the organomolybdenum compound (B) to sulfur atoms derived from the sulfur-based compound (C) is preferably 0.20 or more, more preferably 0.25 or more, and still more preferably 0.30 or more, from the viewpoint of obtaining a lubricating oil composition that can have further improved low-friction characteristics, while it is preferably 3.00 or less, more preferably 2.00 or less, and still more preferably 1.65 or less, from the viewpoint of obtaining a lubricating oil composition with a small elution amount of copper.

When the sulfur-based compound (C) used in one embodiment of the present invention is a zinc dithiophosphate (C1), a ratio [Mo/Zn] by mass of molybdenum atoms derived from the organomolybdenum compound (B) to zinc atoms derived from the zinc dithiophosphate (C1) is preferably 0.35 or more, more preferably 0.50 or more, still more preferably 0.55 or more, and still much more preferably 0.60 or more, from the viewpoint of obtaining a lubricating oil composition that can have further improved low-friction characteristics, while it is preferably 2.70 or less, more preferably 2.50 or less, still more preferably 2.30 or less, and still much more preferably 2.20 or less, from the viewpoint of obtaining a lubricating oil composition with a small elution amount of copper.

### <Component (D): Overbased Metal-Based Detergent>

The lubricating oil composition of the present invention contains an overbased metal-based detergent (D) having a base number of 100 mgKOH/g or more. The lubricating oil composition of the present invention contains the overbased metal-based detergent (D) having a base number of 100 mgKOH/g or more, and can thus have a reduced elution amount of copper while achieving low-friction characteristics at a higher level.

Examples of the overbased metal-based detergent (D) used in one embodiment of the present invention include overbased metal-based sulfonates, overbased metal-based salicylates, and overbased metal-based phenates. In one embodiment, the metal of the overbased metal-based detergent (D) may be calcium (Ca), magnesium (Mg), sodium (Na), or the like, and is more preferably calcium (Ca).

Examples of the overbased metal-based detergent (D) used in one embodiment of the present invention include at least one overbased calcium detergent selected from overbased calcium sulfonate (D1), overbased calcium salicylate (D2), and overbased calcium phenate (D3). Among these, the overbased calcium sulfonate (D1) is preferably used as the overbased metal-based detergent (D), from the viewpoint of obtaining a lubricating oil composition with a small elution amount of copper.

In one embodiment of the present invention, the content of the overbased metal-based detergent (D), based on the total amount (100 mass%) of the lubricating oil composition, is preferably 0.01 mass% or more, 0.03 mass% or more, 0.05 mass% or more, 0.08 mass% or more, or 0.10 mass% or more, from the viewpoint of obtaining a lubricating oil composition with a small elution amount of copper, while it is preferably 1.5 mass% or less, 1.2 mass% or less, or 1.0 mass% or less, from the viewpoint of maintaining good wear resistance of the lubricating oil composition.

### <<Overbased Calcium Sulfonate (D1)>>

Examples of the overbased calcium sulfonate (D1) used in one embodiment of the present invention include compounds represented by the following general formula (d-1):

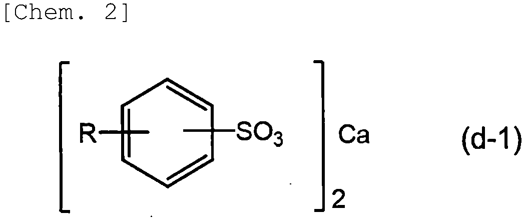

In general formula (d-1), each R is independently a hydrocarbon group having 8 to 30 carbon atoms. Examples of the hydrocarbon group that may be selected as R include alkyl groups having 8 to 30 carbon atoms.

In one embodiment of the present invention, the base number of the overbased calcium sulfonate (D1) may be 120 mgKOH/g or more, 150 mgKOH/g or more, 170 mgKOH/g or more, or 200 mgKOH/g or more, while it may be 400 mgKOH/g or less or 350 mgKOH/g or less.

As used herein, the "base number" of the overbased calcium sulfonate (D1) means a value as measured by the perchloric acid method in accordance with JIS K2501:2003.

In one embodiment of the present invention, the content of the overbased calcium sulfonate (D1), based on the total amount (100 mass%) of the lubricating oil composition, is preferably 0.01 mass% or more, 0.03 mass% or more, 0.05 mass% or more, 0.08 mass% or more, or 0.10 mass% or more, from the viewpoint of obtaining a lubricating oil composition with a small elution amount of copper, while it is preferably 1.5 mass% or less, 1.2 mass% or less, or 1.0 mass% or less, from the viewpoint of maintaining good wear resistance of the lubricating oil composition.

In one embodiment of the present invention, a content (d1) of the overbased calcium sulfonate (D1) in terms of calcium atoms, based on the total amount (100 mass%) of the lubricating oil composition, is preferably 50 ppm by mass or more, 80 ppm by mass or more, 100 ppm by mass or more, or 120 ppm by mass or more, from the viewpoint of obtaining a lubricating oil composition with a small elution amount of copper, while it is preferably 1500 ppm by mass or less, 1300 ppm by mass or less, 1200 ppm by mass or less, or 1100 ppm by mass or less, from the viewpoint of maintaining good wear resistance of the lubricating oil composition.

### <<Overbased Calcium Salicylate (D2)>>

Examples of the overbased calcium salicylate (D2) used in one embodiment of the present invention include compounds represented by the following general formula (d-2):

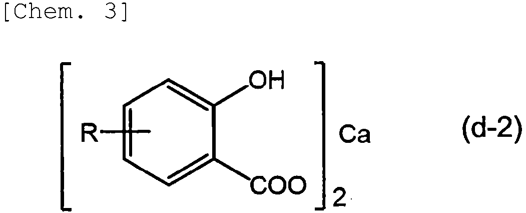

In general formula (d-2), each R is independently a hydrocarbon group having 8 to 30 carbon atoms. Examples of the hydrocarbon group that may be selected as R include alkyl groups having 8 to 30 carbon atoms.

In one embodiment of the present invention, the base number of the overbased calcium salicylate (D2) may be 120 mgKOH/g or more, 150 mgKOH/g or more, 170 mgKOH/g or more, or 200 mgKOH/g or more, while it may be 400 mgKOH/g or less or 350 mgKOH/g or less.

As used herein, the "base number" of the overbased calcium salicylate (D2) means a value as measured by the perchloric acid method in accordance with JIS K2501:2003.

In one embodiment of the present invention, the content of the overbased calcium salicylate (D2), based on the total amount (100 mass%) of the lubricating oil composition, is preferably 0.01 mass% or more, 0.03 mass% or more, 0.05 mass% or more, 0.08 mass% or more, or 0.10 mass% or more, from the viewpoint of obtaining a lubricating oil composition with a small elution amount of copper, while it is preferably 1.5 mass% or less, 1.2 mass% or less, or 1.0 mass% or less, from the viewpoint of maintaining good wear resistance of the lubricating oil composition.

In one embodiment of the present invention, a content (d2) of the overbased calcium salicylate (D2) in terms of calcium atoms, based on the total amount (100 mass%) of the lubricating oil composition, is preferably 50 ppm by mass or more, 80 ppm by mass or more, 100 ppm by mass or more, or 120 ppm by mass or more, from the viewpoint of obtaining a lubricating oil composition with a small elution amount of copper, while it is preferably 1500 ppm by mass or less, 1300 ppm by mass or less, 1200 ppm by mass or less, or 1100 ppm by mass or less, from the viewpoint of maintaining good wear resistance of the lubricating oil composition.

### <<Overbased Calcium Phenate (D3)>>

Examples of the overbased calcium phenate (D3) used in one embodiment of the present invention include compounds represented by the following general formula (d-3) :

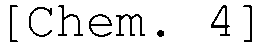

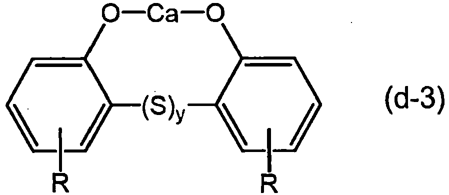

In general formula (d-3), each R is independently a hydrocarbon group having 8 to 30 carbon atoms, and y is an integer of 0 or more. Examples of the hydrocarbon group that may be selected as R include alkyl groups having 8 to 30 carbon atoms.

In one embodiment of the present invention, the base number of the overbased calcium phenate (D3) may be 120 mgKOH/g or more, 150 mgKOH/g or more, 170 mgKOH/g or more, or 200 mgKOH/g or more, while it may be 400 mgKOH/g or less or 350 mgKOH/g or less.

As used herein, the "base number" of the overbased calcium phenate (D3) means a value as measured by the perchloric acid method in accordance with JIS K2501:2003.

In one embodiment of the present invention, the content of the overbased calcium phenate (D3), based on the total amount (100 mass%) of the lubricating oil composition, is preferably 0.01 mass% or more, 0.03 mass% or more, 0.05 mass% or more, 0.08 mass% or more, or 0.10 mass% or more, from the viewpoint of obtaining a lubricating oil composition with a small elution amount of copper, while it is preferably 1.5 mass% or less, 1.2 mass% or less, or 1.0 mass% or less, from the viewpoint of maintaining good wear resistance of the lubricating oil composition.

In one embodiment of the present invention, a content (d3) of the overbased calcium phenate (D3) in terms of calcium atoms, based on the total amount (100 mass%) of the lubricating oil composition, is preferably 50 ppm by mass or more, 80 ppm by mass or more, 100 ppm by mass or more, or 120 ppm by mass or more, from the viewpoint of obtaining a lubricating oil composition with a small elution amount of copper, while it is preferably 1500 ppm by mass or less, 1300 ppm by mass or less, 1200 ppm by mass or less, or 1100 ppm by mass or less, from the viewpoint of maintaining good wear resistance of the lubricating oil composition.

The lubricating oil composition according to one embodiment of the present invention may contain a neutral metal-based detergent from the viewpoint of improving detergency, or may be substantially free of a neutral metal-based detergent from the viewpoint of obtaining a lubricating oil composition with a small elution amount of copper. As used herein, "substantially free of a neutral metal-based detergent" means excluding a lubricating oil composition intentionally blended with the neutral metal-based detergent, and does not exclude an embodiment in which the lubricating oil composition is unavoidably blended with the neutral metal-based detergent. However, when the lubricating oil composition is free of a neutral metal-based detergent, the content of the neutral metal-based detergent is preferably as low as possible, from the same viewpoint as described above.

Specifically, the content of the neutral metal-based detergent that is unavoidably included is, for example, preferably less than 0.05 mass%, less than 0.03 mass%, less than 0.01 mass%, or less than 0.001 mass%, based on the total amount (100 mass%) of the lubricating oil composition.

On the other hand, when the lubricating oil composition contains a neutral metal-based detergent, the content is, for example, preferably 0.01 mass% or more, 0.03 mass% or more, 0.05 mass% or more, 0.08 mass% or more, or 0.10 mass% or more, while it is preferably 1.5 mass% or less, 1.2 mass% or less, or 1.0 mass% or less, based on the total amount (100 mass%) of the lubricating oil composition, from the same viewpoint as described above.

In one embodiment of the present invention, a content ratio [(D)/(C)] by mass of the overbased metal-based detergent (D) to the sulfur-based compound (C) is preferably 0.01 or more, more preferably 0.05 or more, and still more preferably 0.10 or more, from the viewpoint of obtaining a lubricating oil composition with a small elution amount of copper, while it is preferably 10 or less, more preferably 9.5 or less, and still more preferably 9.0 or less, from the viewpoint of obtaining a lubricating oil composition that can have further improved low-friction characteristics.

In one embodiment of the present invention, a content ratio [(D1)/(C)] by mass of the overbased calcium sulfonate (D1) to the sulfur-based compound (C) is preferably 0.01 or more, more preferably 0.05 or more, and still more preferably 0.10 or more, from the viewpoint of obtaining a lubricating oil composition with a small elution amount of copper, while it is preferably 10 or less, more preferably 9.5 or less, and still more preferably 9.0 or less, from the viewpoint of obtaining a lubricating oil composition that can have further improved low-friction characteristics.

In one embodiment of the present invention, a ratio [Ca/S] by mass of calcium atoms derived from the overbased calcium sulfonate (D1) to sulfur atoms derived from the sulfur-based compound (C) is preferably 0.01 or more, more preferably 0.05 or more, and still more preferably 0.10 or more, from the viewpoint of obtaining a lubricating oil composition with a small elution amount of copper, while it is preferably 5.00 or less, more preferably 4.50 or less, and still more preferably 4.00 or less, from the viewpoint of obtaining a lubricating oil composition that can have further improved low-friction characteristics.

When the sulfur-based compound (C) used in one embodiment of the present invention is a zinc dithiophosphate (C1), a ratio [Zn/Ca] by mass of zinc atoms derived from the zinc dithiophosphate (C1) to calcium atoms derived from the overbased calcium sulfonate (D1) is preferably 0.1 or more, 0.2 or more, 0.3 or more, or 0.4 or more, from the viewpoint of obtaining a lubricating oil composition that can have further improved low-friction characteristics, while it is preferably 1.0 or less, 0.9 or less, 0.8 or less, 0.7 or less, or 0.6 or less, from the viewpoint of obtaining a lubricating oil composition with a small elution amount of copper.

### <Lubricating Oil Additives>

The lubricating oil composition according to one embodiment of the present invention may optionally contain other lubricating oil additives besides the components (B) to (D), as long as the effects of the present invention are not impaired.

Examples of such lubricating oil additives include pour point depressants, antioxidants, friction modifiers, antiwear agents, metal deactivators, ashless dispersants, metal deactivators, and anti-foaming agents.

These lubricating oil additives may each be used alone, or may be used in combinations of two or more.

### [Pour Point Depressants]

The lubricating oil composition according to one embodiment of the present invention may contain a pour point depressant. Pour point depressants may be used alone or in combinations of two or more.

Examples of pour point depressants used in one embodiment of the present invention include polymethacrylates, alkylated aromatic compounds, copolymers of fumarate with vinyl acetate, and copolymers of ethylene with vinyl acetate, with polymethacrylates having a weight average molecular weight of 40,000 to 200,000 being preferred.

### [Antioxidants]

The lubricating oil composition according to one embodiment of the present invention may contain an antioxidant. Antioxidants may be used alone or in combinations of two or more.

Examples of antioxidants used in one embodiment of the present invention include amine-based antioxidants, such as alkylated diphenylamine, phenylnaphthylamine, and alkylated phenylnaphthylamine; phenol-based antioxidants, such as 2,6-di-t-butylphenol, 4,4'-methylenebis(2,6-di-t-butylphenol), isooctyl-3-(3,5-di-t-butyl-4-hydroxyphenyl)propionate, and n-octadecyl-3-(3,5-di-t-butyl-4-hydroxyphenyl)propionate; sulfur-based antioxidants, such as phenothiazine, dioctadecyl sulfide, dilauryl-3,3'-thiodipropionate, and 2-mercaptobenzimidazole; etc.

### [Friction Modifiers and Antiwear Agents]

The lubricating oil composition according to one embodiment of the present invention may contain a friction modifier or an antiwear agent. Friction modifiers or antiwear agents may be used alone or in combinations of two or more.

Examples of friction modifiers and antiwear agents used in one embodiment of the present invention include sulfur-based compounds, such as sulfurized olefins, dialkyl polysulfides, diarylalkyl polysulfides, and diaryl polysulfides; phosphorus-based compounds, such as phosphoric acid esters, thiophosphoric acid esters, phosphorous acid esters, alkyl hydrogen phosphites, amine salts of phosphoric acid esters, and amine salts of phosphorous acid esters; ashless friction modifiers, such as amine compounds, fatty acid esters, fatty acid amides, fatty acids, aliphatic alcohols, aliphatic ethers, urea compounds, and hydrazide compounds; etc.

### [Metal Deactivators]

The lubricating oil composition according to one embodiment of the present invention may contain a metal deactivator. Metal deactivators may be used alone or in combinations of two or more.

Examples of metal deactivators used in one embodiment of the present invention include benzotriazoles, triazole derivatives, benzotriazole derivatives, and thiadiazole derivatives.

### [Ashless Dispersants]

The lubricating oil composition according to one embodiment of the present invention may contain an ashless dispersant, from the viewpoint of improving dispersibility. Ashless dispersants may be used alone or in combinations of two or more.

Ashless dispersants used in one embodiment of the present invention are preferably alkenyl succinimides, and examples include alkenyl bis-succinimides represented by the following general formula (f-1) and alkenyl mono-succinimides represented by the following general formula (f-2) :

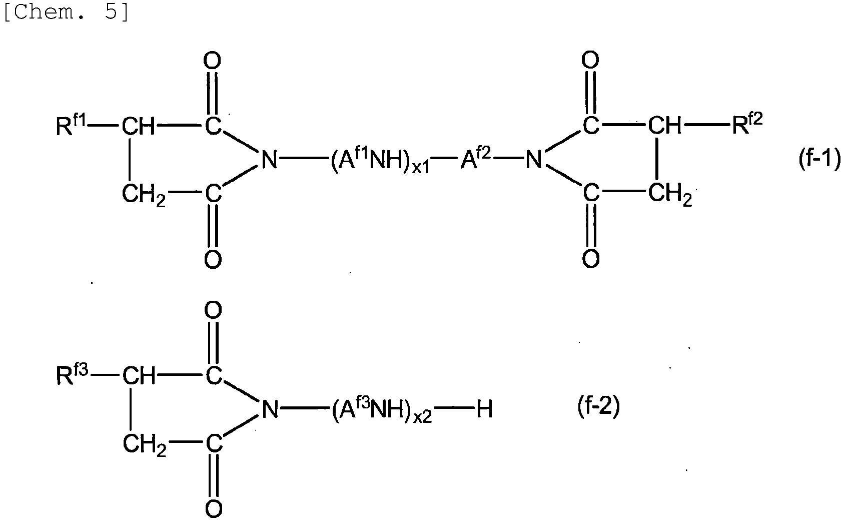

In the general formulae (f-1) and (f-2), R^{f1}, R^{f2}, and R^{f3} are each independently an alkenyl group having a number average molecular weight (Mn) of 900 to 2500.

Examples of the alkenyl group that may be selected as R^{f1}, R^{f2}, and R^{f3} include a polybutenyl group and a polyisobutenyl group.

A^{f1}, A^{f2}, and A^{f3} are each independently an alkylene group having 2 to 5 carbon atoms.

x1 is an integer of 2 to 6.

x2 is an integer of 2 to 6.

The compounds represented by the general formula (f-1) or (f-2) may be modified alkenyl succinimides obtained by reaction with at least one selected from boron compounds, alcohols, aldehydes, ketones, alkylphenols, cyclic carbonates, epoxy compounds, organic acids, and the like.

### [Anti-foaming Agents]

The lubricating oil composition according to one embodiment of the present invention may contain an anti-foaming agent. Anti-foaming agents may be used alone or in combinations of two or more.

Examples of anti-foaming agents used in one embodiment of the present invention include alkyl silicone-based anti-foaming agents, fluorosilicone-based anti-foaming agents, and fluoroalkyl ether-based anti-foaming agents.

### <Method for Producing Lubricating Oil Composition>

The method for producing a lubricating oil composition according to one embodiment of the present invention is not specifically limited, but from the viewpoint of productivity, the method preferably includes the step of blending the components (B) to (D), and optionally various additives, into the component (A).

### [Properties of Lubricating Oil Composition]

The kinematic viscosity at 100°C of the lubricating oil composition according to one embodiment of the present invention is preferably 1.0 mm²/s or more, more preferably 1.2 mm²/s or more, and still more preferably 1.4 mm²/s or more, while, from the viewpoint of obtaining a lubricating oil composition having high cooling performance, it is preferably 4.0 mm²/s or less, more preferably 3.5 mm²/s or less, and still more preferably 3.0 mm²/s or less.

The kinematic viscosity at 40°C of the lubricating oil composition according to one embodiment of the present invention is preferably 20 mm²/s or less, more preferably 19 mm²/s or less, still more preferably 18 mm²/s or less, still much more preferably 17 mm²/s or less, even more preferably 16 mm²/s or less, and particularly preferably 15 mm²/s or less.

The viscosity index of the lubricating oil composition according to one embodiment of the present invention is preferably 70 or more, more preferably 80 or more, still more preferably 90 or more, and particularly preferably 100 or more.

The sulfur content in the lubricating oil composition according to one embodiment of the present invention, based on the total amount (100 mass%) of the lubricating oil composition, is preferably 0.08 mass% or more, and more preferably 0.09 mass% or more, from the viewpoint of obtaining a lubricating oil composition that can have further improved low-friction characteristics, while it is preferably less than 0.28 mass%, more preferably 0.27 mass% or less, and still more preferably 0.26 mass% or less, from the viewpoint of obtaining a lubricating oil composition with a small elution amount of copper.

### [Characteristics and Applications of Lubricating Oil Composition]

The present invention provides a lubricating oil composition that can achieve low-friction characteristics and a reduction in the elution amount of copper at a higher level. One specific index for evaluating the low-friction characteristics may be, for example, the friction coefficient between metals as measured by the method described in the Examples below.

One method for evaluating the elution amount of copper may be, for example, the method described in the Examples below.

The friction coefficient between metals as measured by the method described in the Examples below, using the lubricating oil composition according to one embodiment of the present invention, is preferably 0.059 or less, more preferably 0.058 or less, and still more preferably 0.057 or less.

It can be said that the smaller the friction coefficient between metals is, the superior the low-friction characteristics of the lubricating oil composition are. In the Examples below, a friction coefficient between metals of less than 0.060 was determined to be acceptable.

The elution amount of copper as measured by the method described in the Examples below, using the lubricating oil composition according to one embodiment of the present invention, is preferably 70 ppm by mass or less, more preferably 65 ppm by mass or less, and still more preferably 60 ppm by mass or less.

In the Examples below, an elution amount of copper of 70 ppm by mass or less was determined to be acceptable.

Since the lubricating oil composition according to one embodiment of the present invention has the characteristics as described above, the lubricating oil composition can be suitably used for mechanical devices each integrally comprising a motor and a reduction gear, for example, mechanical devices such as a hydraulic device, a stationary transmission, an automotive transmission, and a cooling device for motors and batteries.

Accordingly, the present invention also provides a mechanical device as set forth in [I] below and use of a lubricating oil composition as set forth in [II] below.
[I] A mechanical device integrally comprising a motor and a reduction gear, the mechanical device being filled with the lubricating oil composition according to one embodiment of the present invention as described above.
[II] Use of a lubricating oil composition, comprising applying the lubricating oil composition according to one embodiment of the present invention as described above to a mechanical device integrally comprising a motor and a reduction gear.

### Examples

Next, the present invention will be described in much more detail with reference to Examples, but the present invention is in no way limited to these Examples. Various physical property values of the components used and the lubricating oil compositions obtained in the examples and comparative examples were measured according to the methods described below.

### (1) Kinematic Viscosity and Viscosity Index

The kinematic viscosity and viscosity index were measured and calculated in accordance with JIS K2283:2000.

### (2) Base Number (Perchloric Acid Method)

The base number was measured by the perchloric acid method in accordance with JIS K2501:2003 (perchloric acid method). (3) Content of Calcium Atoms (Ca)

The content was measured in accordance with JPI-5S-38-92.

### (4) Content of Molybdenum Atoms (Mo)

The content was measured in accordance with JPI-5S-38-92.

### (5) Content of Zinc Atoms (Zn)

The content was measured in accordance with JPI-5S-38-92.

### (6) Content of Sulfur Atoms (S)

The content was measured in accordance with JIS K2541-6:2013.

### (7) Friction Coefficient between Metals

The friction coefficient between metals was measured using a MTM2 (Mini Traction Machine2, manufactured by PCS Instruments) under the following conditions:
- Test temperature: 80°C
- Test time: 1 hour
- Load: 35 N
- Average speed: 200 mm/s
- Slide ratio: A 50% friction coefficient between metals of less than 0.060 was determined to be acceptable.

### (8) Elution Amount of Copper

The ISOT test in accordance with JIS K2514 was performed, specifically as follows: Using copper and iron pieces as catalysts, a sample oil was deteriorated at a temperature of 150°C for 120 hours. For the deteriorated sample oil, the elution amount of copper (unit: ppm by mass) was measured using the method in accordance with JPI-5S-38. It can be said that the smaller the value of elution amount of copper is, the higher the copper elution-inhibiting effect of the lubricating oil composition is. In the Examples, an elution amount of copper of 70 ppm by mass or less was determined to be acceptable.

### Examples 1 to 7 and Comparative Examples 1 to 5

The components (A) to (D) shown in Table 1 were added and mixed in the proportions shown in Table 1 to prepare lubricating oil compositions. The details of each component used in the preparation of each lubricating oil composition are as follows:

### <Base Oil (A)>

- Mineral Oil (A1): 60 N mineral oil classified in Group II of API base oil categories, with a 100°C kinematic viscosity = 2.2 mm²/s and a viscosity index = 109.
- Mineral Oil (A2): 70 N mineral oil classified in Group II of API base oil categories, with a 100°C kinematic viscosity = 2.7 mm²/s and a viscosity index = 111. <Organomolybdenum Compound (B)>
- Molybdenum dithiocarbamate (MoDTC) (a compound of formula (1) wherein R¹ to R⁴ are each independently a hydrocarbon group having 8 or 13 carbon atoms, and X¹ to X⁴ are oxygen atoms. Content of molybdenum atoms = 10.0 mass%, content of sulfur atoms = 11.5 mass% <Sulfur-Based Compound (C)>
- Sulfur-based compound (C1): zinc dithiophosphate (ZnDTP) having a secondary alkyl group. Content of zinc atoms = 9.0 mass%, content of sulfur atoms = 17.1 mass%
- Sulfur-based compound (C2): dibutyl dithiodiglycolate (a compound of formula (2) wherein R¹ is an alkyl group having 1 carbon atom, R² is an alkyl group having 4 carbon atoms, and x = 2). Content of sulfur atoms = 20.7 mass%

### <Overbased Metal-Based Detergent (D)>

- Overbased Ca sulfonate: calcium sulfonate with a base number (perchloric acid method) = 307 mgKOH/g, Ca content = 11.9 mass%

### <Other Additives>

- An additive mixture containing a pour point depressant, an antioxidant, a dispersant, a copper deactivator, and an anti-foaming agent.

For the lubricating oil compositions prepared in the examples and comparative examples, various physical property values were measured and calculated in accordance with the measurement methods described above. The results are shown in Table 1.

### [Table. 1]

**Table. 1**

| | | | | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 |
|---|---|---|---|---|---|---|---|---|---|---|---|---|---|---|---|
| Composition of Lubricating Oil Composition | Component (A) | Mineral Oil (A1) | mass% | 88.81 | 89.31 | 88.91 | 89.66 | 88.96 | 88.51 | 88.11 | 90.26 | 89.41 | 89.76 | 89.11 | 87.81 |
| | | Mineral Oil (A2) | mass% | 5.00 | 5.00 | 5.00 | 5.00 | 5.00 | 5.00 | 5.00 | 5.00 | 5.00 | 5.00 | 5.00 | 5.00 |
| | Component (B) | MoDTC | mass% | 0.50 | 0.50 | 0.50 | 0.50 | 0.35 | 0.80 | 1.20 | 0.50 | 0.50 | 0.50 | 0.20 | 1.50 |
| | Component (C) | Sulfur-Based Compound (C1) | mass% | 0.60 | | | | 0.60 | 0.60 | 0.60 | | | | 0.60 | 0.60 |
| | | Sulfur-Based Compound (C2) | mass% | | 0.10 | 0.50 | 0.50 | | | | | | 0.50 | | |
| | Component (D) | Overbased Ca Sulfonate | mass% | 0.85 | 0.85 | 0.85 | 0.10 | 0.85 | 0.85 | 0.85 | | 0.85 | | 0.85 | 0.85 |
| | Other Additives | | mass% | 4.24 | 4.24 | 4.24 | 4.24 | 4.24 | 4.24 | 4.24 | 4.24 | 4.24 | 4.24 | 4.24 | 4.24 |
| | Total | | mass% | 100.00 | 100.00 | 100.00 | 100.00 | 100.00 | 100.00 | 100.00 | 100.00 | 100.00 | 100.00 | 100.00 | 100.00 |
| | 40°C Kinematic Viscosity | | mm²/s | 9.8 | 9.7 | 9.7 | 9.7 | 9.8 | 9.9 | 9.9 | 9.7 | 9.7 | 9.7 | 9.8 | 10.0 |
| | 100°C Kinematic Viscosity | | mm²/s | 2.7 | 2.7 | 2.7 | 2.7 | 2.7 | 2.7 | 2.7 | 2.7 | 2.7 | 2.7 | 2.7 | 2.7 |
| | Content of Molybdenum Atoms (Mo) | | ppm by mass | 484 | 475 | 472 | 479 | 326 | 800 | 1150 | 489 | 482 | 477 | 180 | 1450 |
| | Content of Calcium Atoms (Ca) | | ppm by mass | 1070 | 1040 | 1040 | 122 | 1040 | 1040 | 1040 | 1> | 1070 | 1> | 1040 | 1040 |
| | Content of Sulfur Atoms (S) | | mass% | 0.17 | 0.09 | 0.17 | 0.16 | 0.15 | 0.20 | 0.25 | 0.06 | 0.07 | 0.16 | 0.14 | 0.28 |
| | Content of Sulfur Atoms (S) | | mass% | 0.11 | 0.03 | 0.10 | 0.10 | 0.11 | 0.11 | 0.11 | 0.00 | 0.00 | 0.10 | 0.11 | 0.11 |
| | Derived from Component (C) | | | | | | | | | | | | | | |
| | Content of Zinc Atoms (Zn) | | ppm by mass | 513 | 1> | 1> | 1> | 535 | 538 | 535 | 1> | 1> | 1> | 539 | 535 |
| Properties of Lubricating Oil Composition | Derived from Component (C) | | | | | | | | | | | | | | |
| | Component (B)/Component (C) | | | 0.83 | 5.00 | 1.00 | 1.00 | 0.58 | 1.33 | 2.00 | | | 1.00 | 0.33 | 2.50 |
| | Component (D)/Component (C) | | | 1.42 | 8.50 | 1.70 | 0.20 | 1.42 | 1.42 | 1.42 | | | 0.00 | 1.42 | 1.42 |
| | Mo/S (Derived frofm Component (C)) | | | 0.44 | 1.58 | 0.47 | 0.48 | 0.30 | 0.73 | 1.05 | | | 0.48 | 0.16 | 1.32 |
| | Mo/Zn (Derived from Component (C)) | | | 0.94 | | | | 0.61 | 1.49 | 2.15 | | | | 0.33 | 2.71 |
| | Zn (Derived from Component (C))/Ca | | | 0.48 | | | | 0.51 | 0.52 | 0.51 | | | | 0.52 | 0.51 |
| | Ca/S (Derived from Component (C)) | | | 0.97 | 3.47 | 1.04 | 0.12 | 0.95 | 0.95 | 0.95 | | | | 0.95 | 0.95 |
| Test Results | Friction Coefficient between Metals | | | 0.039 | 0.052 | 0.043 | 0.056 | 0.048 | 0.036 | 0.036 | 0.101 | 0.092 | 0.060 | 0.090 | 0.035 |
| | Elution Amount of Copper | | ppm by mass | 32 | 2 | 3 | 9 | 30 | 40 | 55 | 31 | 3 | 85 | 27 | 71 |

Table 1 shows that the lubricating oil compositions each comprising a base oil (A), an organomolybdenum compound (B), at least one sulfur-based compound (C) selected from zinc dithiophosphates (C1) and sulfur-containing compounds (C2) free of metal atoms in the molecule and having a sulfur-chain length of 2 or more, and an overbased metal-based detergent (D) having a base number of 100 mgKOH/g or more, wherein a content of the organomolybdenum compound (B) is more than 0.20 mass% and 1.45 mass% or less based on a total amount of the lubricating oil composition, have superior low-friction characteristics and a smaller elution amount of copper, compared with Comparative Examples 1 to 5.

Specifically, the lubricating oil compositions of Comparative Examples 1 and 2, which did not contain the sulfur-based compound (C), did not satisfy the acceptance criterion for friction coefficient between metals. The lubricating oil composition of Comparative Example 3, which did not contain the overbased metal-based detergent (D), did not satisfy the acceptance criterion for elution amount of copper. The lubricating oil composition of Comparative Example 4, in which the content of the organomolybdenum compound (B) was low, did not satisfy the acceptance criterion for friction coefficient between metals. The lubricating oil composition of Comparative Example 5, in which the content of the organomolybdenum compound (B) was high, did not satisfy the acceptance criterion for elution amount of copper. In contrast to these comparative examples, the lubricating oil compositions of the examples had both excellent low-friction characteristics and a reduced elution amount of copper.

## Claims

1. A lubricating oil composition comprising a base oil (A), an organomolybdenum compound (B), at least one sulfur-based compound (C) selected from zinc dithiophosphates (C1) and sulfur-containing compounds (C2) free of metal atoms in the molecule and having a sulfur-chain length of 2 or more, and an overbased metal-based detergent (D) having a base number of 100 mgKOH/g or more, wherein a content of the organomolybdenum compound (B) is more than 0.20 mass% and 1.45 mass% or less, based on a total amount of the lubricating oil composition.

2. The lubricating oil composition according to claim 1, wherein the overbased metal-based detergent (D) contains at least one selected from overbased calcium sulfonate (D1), overbased calcium salicylate (D2), and overbased calcium phenate (D3).

3. The lubricating oil composition according to claim 1 or 2, wherein the overbased metal-based detergent (D) contains the overbased calcium sulfonate (D1).

4. The lubricating oil composition according to claim 3, wherein a content (d1) of the overbased calcium sulfonate (D1) in terms of calcium atoms is 50 ppm by mass or more, based on the total amount of the lubricating oil composition.

5. The lubricating oil composition according to any one of claims 1 to 4, wherein a sulfur content is 0.08 mass% or more, based on the total amount of the lubricating oil composition.

6. The lubricating oil composition according to any one of claims 1 to 5, wherein a content ratio [(B)/(C)] by mass of the organomolybdenum compound (B) to the sulfur-based compound (C) is 0.35 to 5.00.

7. The lubricating oil composition according to any one of claims 1 to 6, wherein a content ratio [(D)/(C)] by mass of the overbased metal-based detergent (D) to the sulfur-based compound (C) is 0.01 to 10.

8. The lubricating oil composition according to any one of claims 1 to 7, wherein the sulfur-based compound (C) contains a zinc dithiophosphate (C1), and a content ratio [(Mo)/(Zn)] by mass of molybdenum (Mo) derived from the organomolybdenum compound (B) to zinc (Zn) derived from the zinc dithiophosphate (C1) is 0.35 to 2.70.

9. The lubricating oil composition according to any one of claims 1 to 8, wherein the sulfur-containing compounds (C2) are compounds represented by R²COOR¹-(S)ₓ-R¹COOR², wherein R¹ and R² are each independently a hydrocarbon group having 1 to 30 carbon atoms, and x is an integer of 2 or more.

10. The lubricating oil composition according to any one of claims 1 to 9, wherein the composition has a kinematic viscosity at 100°C of 4.0 mm²/s or less.

11. The lubricating oil composition according to any one of claims 1 to 10, wherein the composition is used for lubricating a mechanical device integrally comprising a motor and a reduction gear.

12. The lubricating oil composition according to claim 11, wherein the mechanical device is a hydraulic device, a stationary transmission, an automotive transmission, or a cooling device for motors and batteries.

13. A mechanical device integrally comprising a motor and a reduction gear, the mechanical device being filled with the lubricating oil composition according to any one of claims 1 to 10.

14. A method of using a lubricating oil composition, comprising applying the lubricating oil composition according to any one of claims 1 to 10 to a mechanical device integrally comprising a motor and a reduction gear.
